# EUROPEAN PATENT APPLICATION

(11) **EP 4 686 087 A2**
(43) Date of publication of application: **28.01.2026**
(21) Application number: 25190685.5
(22) Date of filing: 21.07.2025
(51) Int. Cl.: H02S 20/32

(54) **SOLAR PANEL TURNING SYSTEM**

(30) Priority: 24.07.2024 FI 20244045
(71) Applicant: Kiikoisten Konepaja Oy, 38360 Sastamala (FI)
(72) Inventor: JOKINEN, Julius, 38360 Sastamala (FI); OJANSIVU, Harri, 38360 Sastamala (FI)
(74) Representative: Berggren Oy

(57) **Abstract**

The invention relates to a solar panel turning system, which comprises at least two installation racks (101, 102, 103), each of which comprises a lower part (104) and an upper part (105) attached to the lower part (104) in a turning manner, which upper part comprises an attaching structure (107), onto which at least one solar panel (108) is attachable, and connecting means (111, 112, 113, 114, 115, 116, 117, 118), by means of which the upper parts (105) are connected to each other, so that the upper parts (105) turn simultaneously. In the solar panel turning system one of said at least two installation racks (102) is equipped with an actuator (106) for turning the upper parts (105).

## Description

### TECHNICAL FIELD OF THE INVENTION

The invention relates to a solar panel turning system according to the preamble of the independent claim presented below.

### BACKGROUND OF THE INVENTION

In traditional solar power plants, the solar panels are attached to roofs or walls of buildings, or alternatively to fixed installation racks installed on the ground. A problem with these solar power plants is that they can be used to produce electricity efficiently only at a certain time of day. For solving this problem, solar panel turning systems have been developed, by means of which the solar panels can be made to follow the movements of the sun and thus they can be used to produce more electricity more evenly, compared to solar power plants, in which the solar panels are installed in place in a fixed manner.

One known solar panel turning system has several installation racks to be installed on the ground, which are meant to be arranged in a row. Each installation rack has a turning attaching structure, onto which one or more solar panels are attachable. The attaching structures are connected to each other with cables, by means of which the turning motion is transferred from one attaching structure to another. The attaching structures are turned with a separate actuator, which is via cables arranged to turn the attaching structure of the installation rack at the end of the row.

A problem with the known solar panel turning system are malfunctions related to the turning mechanism. It has been noted that malfunctions occur especially in the winter, whereby the problems are mostly caused by freezing of the actuator.

### OBJECTS OF THE INVENTION

It is an object of the present invention to reduce or even completely eliminate the above-mentioned problems and flaws, which appear in the prior art.

It is an object of the present invention to provide a solar panel turning system, with which solar panels can be turned in an east-west direction. It is also an object of the present invention to provide a solar panel turning system, by means of which the solar panels can be made to produce electricity as efficiently as possible. It is additionally an object of the present invention to provide a solar panel turning system, which is reliable.

The above-mentioned disadvantages can be reduced or even completely eliminated, and the above-defined objects are attained with the present invention, which is characterised in what is defined in the characterising part of the independent claim presented further below. Some embodiments according to the invention are disclosed in the dependent claims presented further below.

### DESCRIPTION OF THE INVENTION

A solar panel turning system according to the invention comprises at least two installation racks, each of which comprises a lower part and an upper part attached to the lower part in a turning manner, which upper part comprises an attaching structure, onto which at least one solar panel is attachable, and connecting means, by means of which the upper parts are connected to each other, so that the upper parts turn simultaneously. The solar panel turning system according to the invention is characterized in that one of said at least two installation racks is equipped with an actuator for turning the upper parts.

The solar panel turning system according to the invention is a vertical system following the sun. The installation racks of the solar panel turning system according to the invention are meant to be installed on the ground. Steel pile or concrete foundations can be used in the installation, into which the lower parts of the installation racks are attached. The installation racks are installed in a row and at a distance from each other. The distance between the installation racks can be for example 6-18 m. There can be two installation racks, but typically there are more of them in the turning system, such as for example 3-5, 5-10, 10-20 or 20-50.

Each installation rack is made up of a lower part and an upper part arranged to turn in relation thereto. In the upper part of the installation rack there is an attaching structure, onto which at least one solar panel can be attached. Thus, it is characteristic of the system according to the invention that each installation rack has a turning attaching structure for solar panels. Based on the intended use, one or more solar panels can be attached to the attaching structure either in a horizontal or vertical position. The attaching structure is advantageously such that several solar panels can be attached thereto side by side in a vertical position. The attaching structure can for example be an attaching frame made up of C-profiles.

The upper parts of the installation racks are connected to each other with connecting means, by means of which the turning motion is transferred from one installation rack to another. The connecting means are attached to the upper parts of the installation racks, so that the upper parts turn simultaneously. The connecting means thus make it possible to turn the attaching structures in a synchronized manner.

In the solar panel turning system according to the invention, all of the upper parts of the installation racks and thus simultaneously the attaching structures are turned with one actuator, which is placed in one of the installation racks. The other installation racks do not have an actuator meant for turning. The actuator can be used to turn both the upper part of the installation rack equipped with the actuator and the upper parts of the installation racks without actuators. The turning of the upper parts of the installation racks without actuators occurs via the connecting means. The turning angle of the upper parts can be for example 90-180 degrees.

An advantage of the solar panel turning system according to the invention is that by means thereof, the solar panels can be turned in an east-west direction. Thus, the solar panel turning system according to the invention is especially well suited for use at high latitudes. An advantage of the solar panel turning system according to the invention is also that by means thereof, the solar panels can be made to produce electricity as efficiently as possible. An advantage of the solar panel turning system according to the invention is additionally that it is very reliable. The good reliability is especially due to the actuator meant for turning being placed in the installation rack. Integrating the actuator into the installation rack also decreases manufacturing and installation costs, because a separate attaching structure is not needed for the actuator. An advantage of the solar panel turning system according to the invention is additionally that it can largely be built in a bolt-mounted manner, which means lower manufacturing costs. Due to the bolt-mounting, the system fits in a small space for transport, and due to the bolt-mounting and the lighter structure, the installation of the system is also easy.

According to one embodiment of the invention, the upper part of each installation rack comprises a first pipe arranged in a turning manner, to the first end of which the attaching structure is attached. The installation rack is installed on the ground so that the first pipe is in a substantially vertical position. The first pipe is arranged so that it can turn (rotate) around its longitudinal axis. The attaching structure can be attached to the first end of the first pipe so that the angle between the solar panel attached to the attaching structure and the first pipe is 20-60 degrees. The attaching structure can be attached to the first end of the first pipe so that the angle between the solar panel attached to the attaching structure and the first pipe is adjustable. The length of the first pipe can be for example 0.8-3 m and the diameter for example 30-280 mm. The first pipe is advantageously manufactured from metal.

According to one embodiment of the invention, the connecting means comprise a first and second turning arm attached to each first pipe. The first and second turning arm are attached to the first pipe in a substantially perpendicular position. Advantageously, the first and second turning arm are attached at substantially the same height on the first pipe and on its opposite sides. The length of the first and second turning arm can be for example 10-80 cm. The first and second turning arm are advantageously manufactured from metal.

According to one embodiment of the invention, the connecting means comprise a first cable, which is attached to the first turning arms, and a second cable, which is attached to the second turning arms. The first and second cable can be attached to the first and second turning arms for example with bolts. The first and second cable can be made up of one or more cable parts. The length of the first and second cable can be for example 5-20 m and the diameter for example 8-30 mm. The first and second cable are advantageously manufactured from steel. In this text, a cable manufactured from steel means both a steel cable and also a steel rope.

According to one embodiment of the invention, the connecting means comprise at least one first rigging screw, which is connected to the first cable, and at least one second rigging screw, which is connected to the second cable. The rigging screw is used for tightening the cable. Advantageously, a rigging screw is connected to each cable section connecting two installation racks.

According to one embodiment of the invention, the lower part of the installation rack equipped with the actuator comprises a second pipe arranged in a fixed manner, the first end of which is attached to the second end of the first pipe via the actuator. The second end of the first pipe and the first end of the second pipe can be attached to the actuator with flange attachments. The second pipe is substantially parallel with the first pipe. The length of the second pipe can be for example 10-150 cm, and the diameter for example 60-460 mm. The second pipe is advantageously manufactured from metal.

According to one embodiment of the invention, the actuator comprises a worm gear and a thereto connected motor. The worm gear is a gearing, where a threaded screw transmits kinetic energy to a threaded wheel with the aid of rotational movement. An electric motor functioning with direct current or alternating current is advantageously used as the motor.

According to one embodiment of the invention, the lower part of each installation rack without an actuator comprises a second pipe arranged in a fixed manner, inside which the second end of the first pipe is installed. The second pipe is substantially parallel with the first pipe. The length of the second pipe can be for example 50-150 cm, and the diameter for example 60-460 mm. The second pipe is advantageously manufactured from metal.

According to one embodiment of the invention, a first bushing has been installed in the first end, and a second bushing has been installed in the second end of the second pipe of each installation rack without an actuator. The first pipe, the second end of which is fitted inside the second pipe, is thus arranged into contact with the first and second bushing and to rotate on them. The first and second bushing can be manufactured from plastic or metal.

According to one embodiment of the invention, a third bushing has been installed in the second end of the first pipe of each installation rack without an actuator. The third bushing is arranged into contact with the second bushing. Use of the third bushing reduces the frictional force working against the rotation of the first pipe. The third bushing can be manufactured from plastic or metal.

According to one embodiment of the invention, the lower part of each installation rack comprises a stand. The stand is meant to be installed on the ground and it can be manufactured from concrete or steel. The stand can be installed partly or completely inside the ground. The stand can be installed directly on the ground or it can be attached to a steel pile or concrete foundation installed on the ground. The second pipe is attached to the stand. The second pipe can be attached to the stand for example with bolts, which are tightened against the pipe. The position of the pipe can be fine-tuned with the aid of the bolts. The second pipe of the installation rack equipped with the actuator can be attached to the upper end of the stand with a flange attachment.

According to one embodiment of the invention, there is an odd number of installation racks and the actuator is located in the installation rack in the middle. An advantage of this embodiment is that the stresses directed toward the connecting means remain as small as possible. Additionally, when the actuator is in the middle, it receives stresses from both directions of the row during turning, which makes it more stable.

According to one embodiment of the invention, the solar panel turning system comprises a light sensor and a control unit for controlling the actuator based on a signal received from the light sensor. The light sensor is advantageously attached to the installation rack equipped with the actuator. The actuator can alternatively be controlled also with an algorithm developed for following the sun.

According to one embodiment of the invention, at least one solar panel has been attached to the attaching structure of each installation rack. The solar panel(s) can be attached to the attaching structure either in a horizontal or vertical position. Advantageously, there are several solar panels in the attaching structure, which are attached side by side in a vertical position. The number of solar panels attached to the attaching structure can for example be 1-3, 3-5 or 5-10. The wires required by the solar panels can be arranged to run inside the pipes and through a hole in the stand.

### BRIEF DESCRIPTION OF THE DRAWING

In the following the invention will be described in more detail with reference to the embodiments presented as examples and the enclosed figures, in which
- Figure 1: shows a solar panel turning system according to an embodiment of the invention,
- Figure 2: shows an installation rack equipped with an actuator to be used in the solar panel turning system according to Figure 1,
- Figure 3: shows an installation rack without an actuator to be used in the solar panel turning system according to Figure 1,
- Figure 4: shows an alternative installation rack equipped with an actuator.

### DETAILED DESCRIPTION OF THE DRAWING

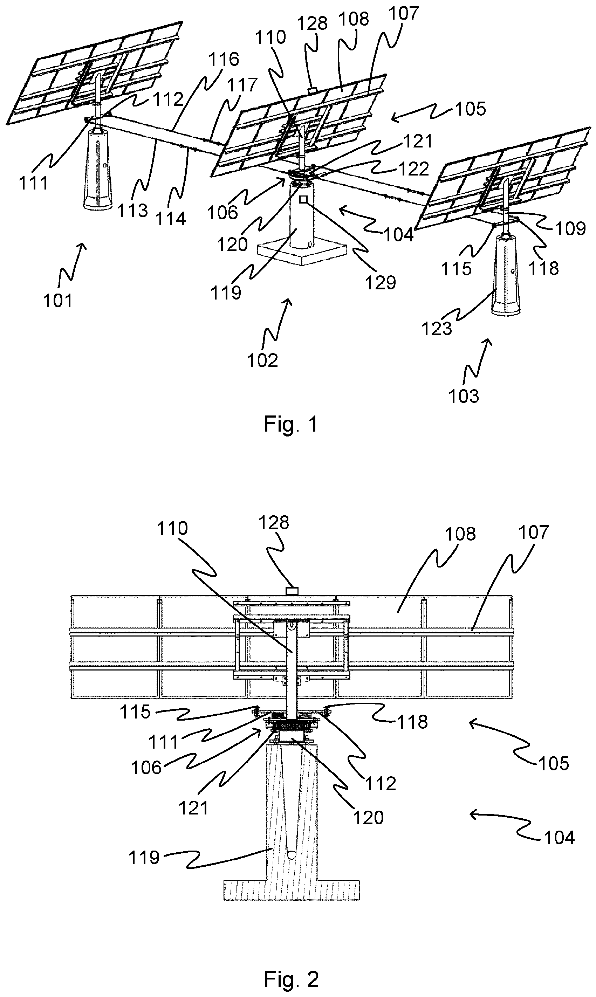

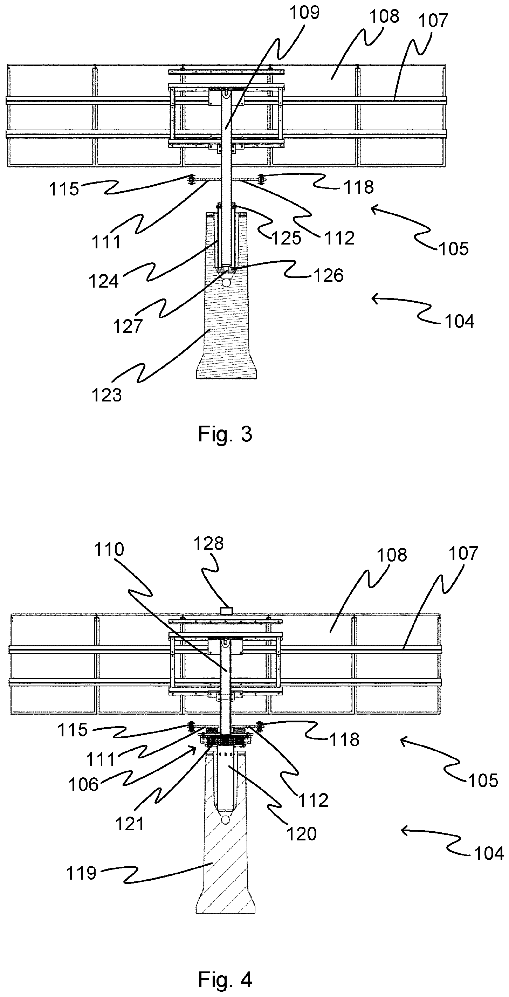

Figure 1 shows a solar panel turning system according to an embodiment of the invention. The system comprises three installation racks 101, 102 and 103 arranged in a row, each of which comprises a lower part 104 and an upper part 105 attached to the lower part 104 in a turning manner. The installation rack 102, which is arranged in the middle of the row, comprises an actuator 106 for turning the upper parts 105 of the installation racks 101, 102 and 103. The installation racks 101 and 103 do not have a corresponding actuator. Figure 2 shows an installation rack 102 equipped with the actuator 106 and Figure 3 shows an installation rack 101, 103 without an actuator.

The upper part 105 of each installation rack 101, 102 and 103 comprises an attaching frame 107, whereto five solar panels 108 have been attached. The upper parts 105 of the installation racks 101 and 103 comprise a pipe 109, to the upper end of which the attaching frame 107 is attached. Correspondingly, the upper part 105 of the installation rack 102 comprises a pipe 110, to the upper end of which the attaching frame 107 is attached. The pipes 109 and 110 are arranged so that they can turn around their longitudinal axes. The installation racks 101, 102 and 103 are meant to be installed so that the pipes 109 and 110 are in a substantially vertical position.

Turning arms 111 and 112 have been attached to the pipes 109 and 110. The turning arms 111 and 112 are attached on opposite sides of the pipes 109 and 110 and perpendicularly to the longitudinal axis of the pipes 109 and 110. The turning arm 111 of the installation rack 102 is connected by means of cables 113 and rigging screws 114 to the turning arms 111 of the installation racks 101 and 103. The first ends of the cables 113 are attached to the turning arms 111 with bolts 115 and the second ends of the cables 113 are connected together with rigging screws 114. Correspondingly, the turning arm 112 of the installation rack 102 is connected by means of cables 116 and rigging screws 117 to the turning arms 112 of the installation racks 101 and 103. The first ends of the cables 116 are attached to the turning arms 112 with bolts 118 and the second ends of the cables 116 are connected together with rigging screws 117. The turning arms 111 and 112 and the cables 113 and 116 and rigging screws 114 and 117 connected between them make it possible that the upper parts 105 of the installation racks 101, 102 and 103 and thus the solar panels 108 attached on the attaching frames 107 thereon can be turned simultaneously.

The lower part 104 of the installation rack 102 comprises a stand 119 to be installed on the ground and a pipe 120, the lower end of which is attached with a flange attachment to the upper end of the stand 119. The upper end of the pipe 120 is in turn attached via the actuator 106 to the lower end of the pipe 110. The upper end of the pipe 120 and the lower end of the pipe 110 are attached with a flange attachment to the actuator 106. The actuator 106 can be used to turn both the upper part 105 of the installation rack 102 equipped with the actuator 106 and also the upper parts 105 of the installation racks 101 and 103 without actuators. The turning of the upper parts 105 of the installation racks 101 and 103 without actuators occurs by means of the cables 113 and 116 and the rigging screws 113 and 117 connected to the turning arms 111 and 112. The actuator 106 comprises a worm gear 121 and a thereto connected motor 122.

The lower parts 104 of the installation racks 101 and 103 comprise a stand 123 to be installed on the ground, inside which a pipe 124 is installed. The pipe 124 is attached to the stand 123 with bolts (not shown in the figures), which are tightened against the pipe 124. The position of the pipe 124 can be fine-tuned with the aid of the bolts. The lower end of the pipe 109 is fitted inside the pipe 124. A bushing 125 has been installed in the upper end of the pipe 124 and a bushing 126 has been installed in the lower end. A bushing 127 has been installed in the lower end of the pipe 109. When rotating, the pipe 109 is supported on the bushing 125 and via the bushing 127 on the bushing 126.

The solar panel turning system comprises a light sensor 128 and a control unit 129 for controlling the actuator 106 based on the signal received from the light sensor 128. The light sensor 128 and the control unit 129 are attached to the installation rack 102 equipped with the actuator 106.

Figure 4 shows an alternative installation rack equipped with an actuator. The installation rack differs from the installation rack shown in Figure 2 with regard to the structure of the lower part 104. In the installation rack shown in Figure 4, the stand 119 has a different shape and the pipe 120 is installed inside the stand 119. The pipe 120 is attached to the stand 119 with bolts (not shown in the figure), which are tightened against the pipe 120. The position of the pipe 120 can be fine-tuned with the aid of the bolts.

It is obvious to a person skilled in the art that the invention is not limited merely to the above-described examples, but the invention may vary within the scope of the claims presented below. The dependent claims present some possible embodiments of the invention, and they are as such not to be considered to restrict the protective scope of the invention.

## Claims

1. A solar panel turning system, which comprises
- at least two installation racks (101, 102, 103), each of which comprises a lower part (104) and an upper part (105) attached to the lower part (104) in a turning manner, which upper part comprises an attaching structure (107), onto which at least one solar panel (108) is attachable, and
- connecting means (111, 112, 113, 114, 115, 116, 117, 118), by means of which the upper parts (105) are connected to each other, so that the upper parts (105) turn simultaneously,
**characterized in that** one of said at least two installation racks (102) is equipped with an actuator (106) for turning the upper parts (105).

2. The solar panel turning system according to claim 1, **characterized in that** the upper part (105) of each installation rack (101, 102, 103) comprises a first pipe (109, 110) arranged in a turning manner, at the first end of which the attaching structure (107) is attached.

3. The solar panel turning system according to claim 2, **characterized in that** the connecting means comprise a first and second turning arm (111, 112) attached to each first pipe (109, 110).

4. The solar panel turning system according to claim 3, **characterized in that** the connecting means comprise a first cable (113), which is attached to the first turning arms (111), and a second cable (116), which is attached to the second turning arms (112).

5. The solar panel turning system according to claim 4, **characterized in that** the connecting means comprise at least one first rigging screw (114), which is connected to the first cable (113), and at least one second rigging screw (117), which is connected to the second cable (116).

6. The solar panel turning system according to any of the preceding claims, **characterized in that** the lower part (104) of the installation rack (102) equipped with the actuator (106) comprises a second pipe (120) arranged in a fixed manner, the first end of which is attached to the second end of the first pipe (110) by means of the actuator (106).

7. The solar panel turning system according to any of the preceding claims, **characterized in that** the actuator (106) comprises a worm gear (121) and a thereto connected motor (122).

8. The solar panel turning system according to any of the preceding claims, **characterized in that** the lower part (104) of each installation rack (101, 102) without an actuator comprises a second pipe (124) arranged in a fixed manner, inside which the second end of the first pipe (109) is installed.

9. The solar panel turning system according to claim 8, **characterized in that** a first bushing (125) has been installed in the first end, and a second bushing (126) has been installed in the second end of the second pipe (124) of each installation rack (101, 103) without an actuator.

10. The solar panel turning system according to claim 9, **characterized in that** a third bushing (127) has been installed in the second end of the first pipe (109) of each installation rack (101, 103) without an actuator.

11. The solar panel turning system according to any of the preceding claims, **characterized in that** the lower part (104) of each installation rack (101, 102, 103) comprises a stand (119, 123).

12. The solar panel turning system according to any of the preceding claims, **characterized in that** there is an odd number of installation racks (101, 102, 103) and the actuator (106) is located in the installation rack (102) in the middle.

13. The solar panel turning system according to any of the preceding claims, **characterized in that** the solar panel turning system comprises a light sensor (128) and a control unit (129) for controlling the actuator (106) based on a signal received from the light sensor (128).

14. The solar panel turning system according to any of the preceding claims, **characterized in that** at least one solar panel (108) has been attached to the attaching structure (107) of each installation rack (101, 102, 103).
